Europäisches Patentamt

European Patent Office

Office européen des brevets

(19)

(11) Veröffentlichungsnummer : **0 117 305 B1**

(12) **EUROPÄISCHE PATENTSCHRIFT**

(45) Veröffentlichungstag der Patentschrift :
06.05.87

(21) Anmeldenummer : 83112434.2

(22) Anmeldetag : 10.12.83

(51) Int. Cl.⁴ : **B 25 H 1/10, B 25 H 1/02**

(54) **Werkbank.**

(30) Priorität : 30.12.82 DE 3248627

(43) Veröffentlichungstag der Anmeldung :
05.09.84 Patentblatt 84/36

(45) Bekanntmachung des Hinweises auf die Patenterteilung : 06.05.87 Patentblatt 87/19

(84) Benannte Vertragsstaaten :
AT CH FR GB IT LI SE

(56) Entgegenhaltungen :
US-A- 4 114 665
US-A- 4 249 442
US-A- 4 270 427
US-A- 4 350 193

(73) Patentinhaber : **FESTO-Maschinenfabrik Gottlieb Stoll**
**Ulmer Strasse 48**
**D-7300 Esslingen (DE)**

(72) Erfinder : **Maier, Peter, Dipl.-Ing.**
**Gerokstrasse 1**
**D-7311 Neidlingen (DE)**
Erfinder : **Arnold, Günter**
**Albstrasse 5**
**D-7441 Kohlberg (DE)**

(74) Vertreter : **Magenbauer, Rudolf, Dipl.-Ing. et al**
**Patentanwälte Dipl.-Ing. Rudolf Magenbauer Dipl.-Phys. Dr. Otto Reimold Hölderlinweg 58**
**D-7300 Esslingen (DE)**

EP 0 117 305 B1

**Beschreibung**

Die Erfindung betrifft eine Werkbank mit einem Antriebsaggregat für eine ein Werkzeug lösbar tragende Antriebswelle, die mit dem Antriebsaggregat gemeinsam verschwenkbar und feststellbar an einem Tischgestell angeordnet ist, das eine als Auflage für Werkstücke dienende Tischplatte besitzt, wobei die Antriebswelle und das Antriebsaggregat unter Vermittlung von Lagerzapfen in Schwenkeingriff mit zwei am Tischgestell vorgesehenen und parallel zueinander angeordneten Schwenksegmenten stehen.

Derartige Werkbänke dienen zum maschinellen Bearbeiten von Werkstücken. Dazu wird ein dem gewünschten Arbeitsgang entsprechendes Werkzeug, z. B. ein Schleif- oder Polierwerkzeug, auf der Welle des Antriebsaggregats befestigt und vermittels des Antriebsaggregats in Rotation versetzt. Das Werkstück wird sodann in Berührkontakt mit dem Werkzeug gebracht, wobei in der Regel das Tischgestell zur Unterstützung und Führung des Werkstücks dient. Bekannte Werkbänke der genannten Art, z. B. Schleiftische oder Poliertische, sind in ihrem konstruktiven Aufbau regelmäßig nur für einige wenige Bearbeitungsvorgänge geeignet. Es bestehen nur begrenzte Möglichkeiten, Werkzeuge zu wechseln, was mit aufwendigen Umbauten verbunden ist. Überdies sind bekannte Werkbänke hinsichtlich der Größe der zu bearbeitenden Werkstücke prinzipiell beschränkt. Es ist auch schon aus der US-PS-42 70 427 eine Werkbank mit den Merkmalen des Oberbegriffs des Anspruchs 1 bekannt geworden, bei der das Antriebsaggregat, das z. B. für eine Kreissäge bestimmt ist, an der Werkbank um einen kleineren Winkel von z. B. 45° verschwenkbar gelagert, wobei die Schwenksegmente zum Feststellen des Antriebsaggregats in der jeweiligen Schwenklage dienen. Diese bekannte Anordnung bietet jedoch nur wenige Variationsmöglichkeiten, die Palette der Einsatzmöglichkeiten dieser bekannten Anordnung, die praktisch nur für Sägearbeiten gedacht ist, ist schmal.

Aufgabe der Erfindung ist es demgegenüber, eine Werkbank der eingangs genannten Art zu schaffen, die bei einfachem Aufbau eine einfache, leichte Auswechselung des Antriebsaggregates erlaubt und die darüberhinaus sehr vielseitig hinsichtlich ihrer Einsatzmöglichkeiten ist, indem sie sich mit einer Vielzahl verschiedener Werkstücke bestücken und ohne bzw. mit sehr einfachem Umbau für die verschiedensten Bearbeitungsvorgänge verwenden lässt, wobei eine flexible Anpassung an die Größe der Werkstücke möglich ist.

Diese Aufgabe wird nach dem kennzeichnenden Teil des Hauptanspruchs dadurch gelöst, daß das Tischgestell einen Profilrahmen besitzt, wobei die Tischplatte in Längsprofilen des Profilrahmens verschiebbar geführt ist, daß die beiden Schwenksegmente an zwei einander gegenüberliegenden Längsprofilen des Profilrahmens entlang diesen verstellbar und abnehmbar angeordnet sind und an ihnen das mit integrierter Antriebswelle ausgestattete Antriebsaggregat um zwei in einer gemeinsamen Drehachse angeordnete und in Bohrungen der Schwenksegmente einsitzende Lagerzapfen verschwenkbar und feststellbar gelagert ist, und daß das Antriebsaggregat zwischen Stellungen verschwenkbar ist, in denen seine Antriebswelle parallel bzw. rechtwinkelig zur Tischplatte orientiert ist.

Vorteile dieser Anordnung ergeben sich zunächst aus der Verwendung eines Profilrahmens für das Tischgestell. Dadurch wird ein Aufbau des Tischgestells aus Normteilen erreicht, die für verschiedene Werkbankgrößen Verwendung finden können und sich deshalb in großer Serie einfach und kostengünstig herstellen lassen. Die Profile des Profilrahmens bilden außerdem herstellungstechnisch besonders einfache Führungselemente für diverse Verschiebeteile der Werkbank. Zu solchen Verschiebeteilen gehören die Schwenksegmente, in denen das Antriebsaggregat um eine Schwenkachse drehbar gehaltert ist, sowie eine zur Auflage von Werkstücken dienende Tischplatte. Das Antriebsaggregat läßt sich in den Schwenksegmenten relativ zu dem Profilrahmen verschieben und neigen, wodurch eine Vielzahl möglicher Arbeitspositionen erreicht werden kann. Als weitere Verschiebeteile können in dem Profilrahmen Anschläge, Werkstückhalter, zusätzliche Arbeitsplatten usw. verschiebbar geführt sein. Die Verwendung von Profilstücken zum Aufbau des kombinierten Trag- und Führungsgestells hat den weiteren Vorteil, daß sich dieses Gestell im Bedarfsfall auf einfache Weise vergrößern oder verkleinern und dadurch den Dimensionen des zu bearbeitenden Werkstücks anpassen läßt. Die Verschwenkbarkeit des Antriebsaggregats um 90° ermöglicht es beispielsweise, die erfindungsgemäße Werkbank als Schleiftisch sowohl mit Schleifwalzen als auch mit Schleiftellern zu betreiben, was eine universelle Anwendbarkeit sichert. Durch die verschiedenen einstellbaren Zwischenpositionen können Arbeitsgänge mit beliebig geneigten Werkzeugen durchgeführt werden, z. B. sei das Schleifen auf Gehrung erwähnt, es ist außerdem z. B. auch ein Schleifen negativer Winkel möglich, was insbesondere im Modellbau von Vorteil ist. Durch die Erfindung wird somit eine sehr vielseitig verwendbare Werkbank geschaffen.

Vorteilhafte Weiterbildungen der Erfindung sind in nachgeordneten Ansprüchen gekennzeichnet.

Die in einer Weiterbildung gemäß Anspruch 10 vorgesehene Schutzhaube vermeidet Verletzungen des Bedienungspersonals ebenso wie zufällige Beschädigungen des zu bearbeitenden Werkstücks. Die Schutzhaube kann in vorteilhafter Weise mit einer Vorrichtung zum Absaugen von Staub oder zur Berieselung mit einem Schmiermittel versehen sein, wodurch die Anwendungsbereiche der Werkbank gemäß der Erfindung erweitert werden.

Durch die Merkmale gemäß den Ansprüchen 3 und 11 bis 14 wird eine Anordnung charakterisiert, bei der die Schwenksegmente unterhalb der Tischebene versenkt liegen und zur Auflage einer Tischplatte dienen, die bündig mit der Oberseite des Profilrahmens abschließt. Hierdurch wird eine gemeinsame Tischebene geschaffen. Stufen und Kanten, die die Führung des zu bearbeitenden Werkstücks auf dem Tischgestell behindern könnten, werden in vorteilhafter Weise vermieden. Das gekennzeichnete Längsprofil gestattet durch die Zahl und Anordnung seiner Nuten die simultane Führung diverser Verschiebeteile und kann dadurch universell verwendet werden, es ist mit einer schrägen Anlagefläche für die Tischbeine versehen, deren Schrägstellung der Werkbank ein hohes Maß an Stabilität verleiht, außerdem ergibt sich hierbei eine herstellungstechnisch besonders einfache Anordnung, überdies weist die erfindungsgemäße Werkbank ein niedriges Gewicht auf, so daß sie leicht transportiert werden kann. Die Anordnung des Antriebsaggregats unterhalb der Tischebene ermöglicht es, geeignete Tischplatten über dem Antriebsaggregat bis dicht an das jeweilige Werkzeug zu verschieben. Hierdurch wird einerseits das Antriebsaggregat optimal geschützt und andererseits ein besonders bedienungsfreundlicher Aufbau geschaffen.

Die Erfindung wird anhand eines in den Abbildungen dargestellten Ausführungsbeispieles näher erläutert. Es zeigen :

Figur 1 eine perspektivische Ansicht einer Werkbank gemäß der Erfindung, bei der das Antriebsaggregat mit einem Schleifteller bestückt ist ;

Figur 2 das in Schwenksgmenten gehaltene Antriebsaggregat gemäß Fig. 1, um 90° geschwenkt und mit einer Schleifwalze bestückt ;

Figur 3 eine Draufsicht auf ein Schwenksegment ;

Figur 4 eine Schnittansicht eines Längsprofils mit Schwenksegment und Tischplatte, wobei das Schwenksegment entlang der Linie IV-IV von Fig. 3 geschnitten ist ;

Figur 5 eine Seitenansicht, teilweise schematisch, einer weiteren Ausführungsform der Werkbank ;

Figur 6 eine Draufsicht auf das Antriebsaggregat der Werkbank gemäß Fig. 5 mit Blick in Richtung VI von Fig. 5 ;

Figur 7 eine Frontansicht des Antriebsaggregats der Werkbank gemäß Fig. 5 mit Blick in Richtung VII von Fig. 5.

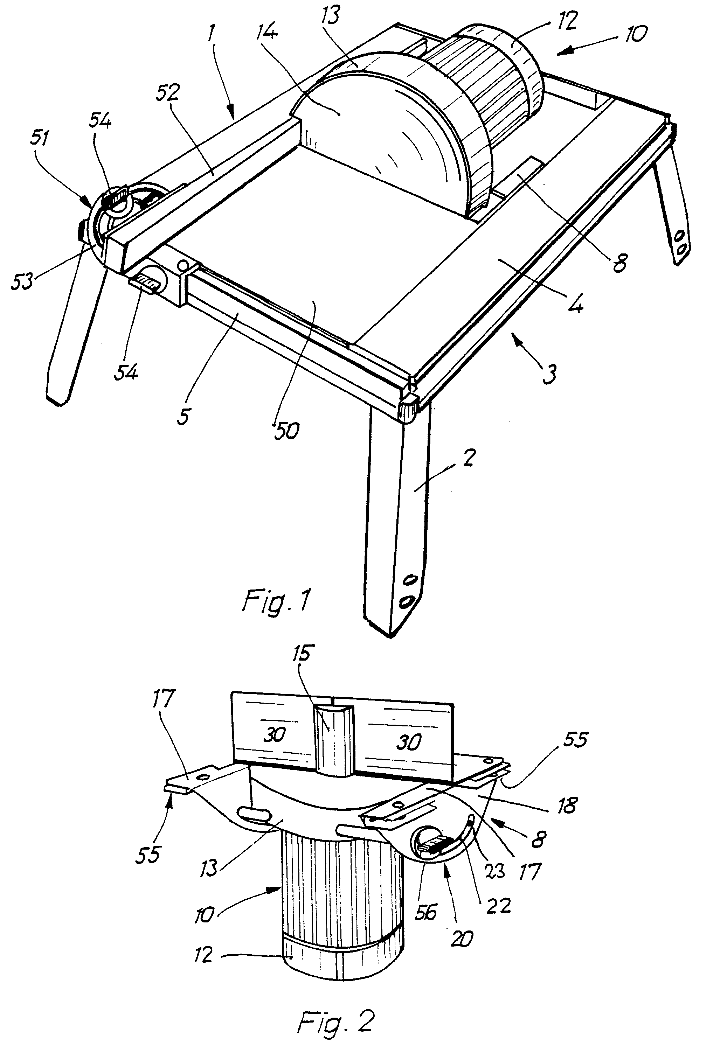

Bezugnehmend auf Fig. 1, ist ein Ausführungsbeispiel der insgesamt mit 1 bezeichneten Werkbank dargestellt. Diese weist ein rechteckiges Tischgestell auf, das aus einem auf Tischbeine 2 montierten Profilrahmen 3 aufgebaut ist. Der Profilrahmen 3 besteht aus zwei einander gegenüberliegenden Längsprofilen 4, die durch rechtwinklig dazu verlaufende Querprofile 5 miteinander verbunden sind. Längsprofile 4 und Querprofile 5 stoßen an den Ecken des Tischgestells aneinander, an denen auch die vier Tischbeine 2 angeordnet sind. Die Tischbeine stehen von dem Profilrahmen 3 schräg nach unten und außen hin ab, so daß ihre Standfläche größer ist als die Fläche des Profilrahmens 3. Die Tischbeine 2 sind dabei gegenüber dem Profilrahmen 3 vorzugsweise in einer Diagonale zwischen je einem Längsprofil 4 und Querprofil 5 ausgestellt. Diese Anordnung verleiht dem Tischgestell ein hohes Maß an Stabilität. Fig. 1 läßt weiterhin eine bevorzugte Form der Längsprofile 4 erkennen, nach der diese deutlich breiter sind als hoch ; auch übertrifft die Breite der Längsprofile 4 die der Querprofile 5. In dieser Anordnung bildet der ebene Profilrücken 6 der Längsprofile 4 den Teil einer Tischebene, in der auch die Oberseite einer Tischplatte 50 liegt, die den Profilrahmen 3 überspannt. Wie noch im einzelnen dargelegt wird, ist die Tischplatte 50 auf dem Profilrahmen 3 verschiebbar geführt. Die Tischplatte 50 sowie die Profilrücken 6 der Längsprofile 4 dienen als Auflagefläche für ein zu bearbeitendes Werkstück (nicht dargestellt). Zur Führung des Werkstücks auf der Tischebene ist ein Anschlag 51 vorgesehen, der seinerseits an der Außenseite eines Querprofils 5 verschiebbar festgelegt ist. Der Anschlag 51 trägt eine Schiene 52, die mit ihrer Unterseite auf der Tischebene aufliegt und sich in seinem Gelenkstück 53 verschwenken läßt. Zur Fixierung des Anschlags 51 an dem Querprofil 5 sowie zur Arretierung der Schiene 52 in dem Gelenkstück 53 dienen jeweils geeignete Klemmpratzen, von denen in Fig. 1 nur die Stellschrauben 54 zu erkennen sind.

Unmittelbar anschließend an die Tischplatte 50 und den Anschlag 51 ist in dem Profilrahmen 3 ein Antriebsaggregat 10 gehalten. Dieses besteht aus einem Motor 12, der eine zum Befestigen von Werkzeugen geeignete Welle treibt. Die Welle mündet in einem Werkzeugkopf 13, der u. a. eine rotierende Frontplatte 14 tragen kann. Bei dieser, in Fig. 1 illustrierten Betriebsfrom der erfindungsgemäßen Werkbank 1 dient diese bevorzugt zum Schleifen oder Trennen von Werkstücken. Dazu wird auf der Frontplatte 14 ein Stück Schleifpapier, ein Feilblech oder ein Schleifvlies festgelegt. z. B. verklebt oder verschraubt, und so eine Schleifscheibe geschaffen. Weiterhin kann im Umfangsbereich der Frontplatte 14 ein Trennscheibenring montiert werden. der ein Trennen oder Schlitzen von Werkstücken ermöglicht. In einer besonders vorteilhaften Ausbildung der Erfindung wird der Trennscheibenring gleichzeitig mit einem Schleifmittel an der tellerförmigen Frontplatte 14 festgelegt und so ein kombiniertes Werkzeug für Zerteilung und Oberflächenbearbeitung eines Werkstücks geschaffen. Bei einer alternativen Anwendungsform der Erfindung, die in Fig. 2 illustriert ist, ist auf dem Werkzeugkopf 13 hingegen ein Hülsenträger 15 montiert, der von der Welle des Antriebsaggregats 10 angetrieben wird. Auf diesen Hülsenträger 15 können Schleifhülsen aus Schleifpapier, Feilblech und oder Scheiben aus Vlies aufgesteckt werden, um Schleifarbeiten durchzuführen. Ebenso ist es möglich, mit sehr feinem Schleifpapier o. ä. Polierarbeiten durchzuführen. Anstelle einer rotierenden Frontplatte 14 oder eines Hülsenträgers 15 kann auch eine Bürste mit Borsten aus Metall oder Sisal auf dem Antriebsaggregat 10 festgelegt werden, und auch die Verwendung anderer Werkzeuge ist möglich.

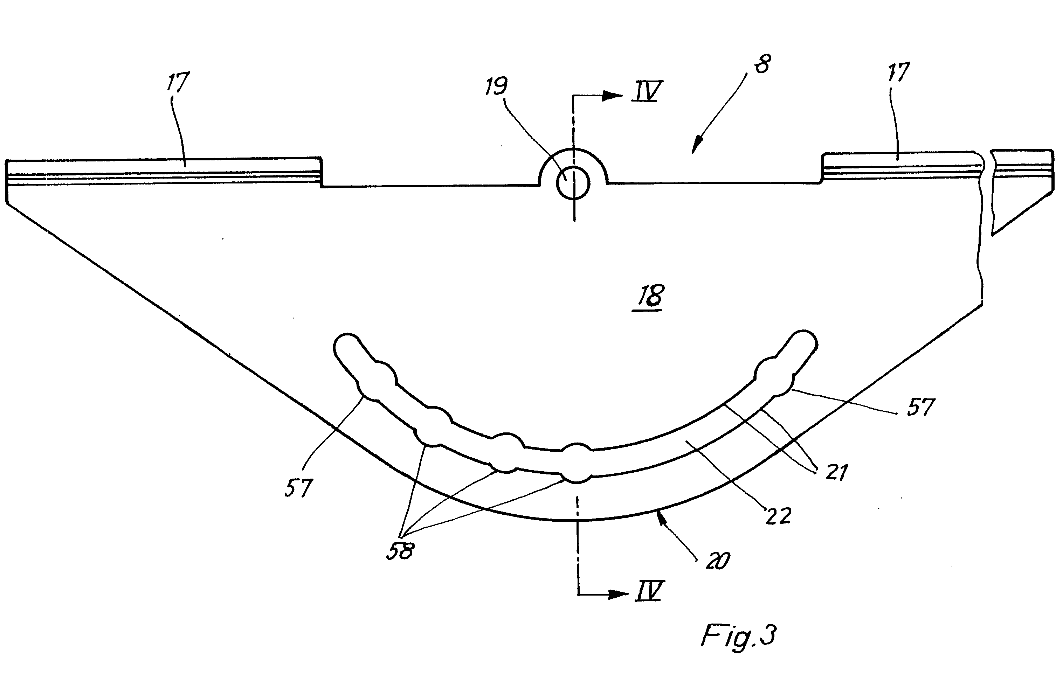

Das somit recht universell mit Werkzeugen zu bestückende Antriebsaggregat 10 ist erfindungsgemäß in Schwenksegmenten 8 drehbar gehalten, die ihrerseits auf dem Profilrahmen 3 verschiebbar geführt sind. Das Antriebsaggregat 10 ist in den Schwenksegmenten 8 zwischen Grundstellungen verschwenkbar, in denen seine Welle parallel (vgl. Fig. 1) oder senkrecht (vgl. Fig. 2) zur Tischebene orientiert ist. Darüber hinaus ist vorgesehen, daß das Antriebsaggregat 10 in alle Winkelpositionen zwischen den Grundstellungen und darüber hinaus in einem gewissen Winkelbereich jenseits der Grundstellungen verstellbar und arretierbar ist. Bezugnehmend auf Fig. 1 und Fig. 2, ist zu diesem Zweck an den zwei einander gegenüberliegenden Längsprofilen 4 des Profilrahmens 3 je ein Schwenksegment 8 vorgesehen, das sich parallel zu dem Längsprofil 4 in der durch den Profilrahmen 3 aufgespannten Ebene verschieben läßt. Das Schwenksegment 8 hat dabei im wesentlichen L-förmige Gestalt. Es läuft mit einem oberen Schenkel 17 in einer Führungsschiene des Längsprofils 4 ; wie Fig. 2 zeigt, ist dazu das auslaufende Ende des oberen Schenkels 17 klauenartig gebogen. Weiterhin sind an den Schwenksegmenten 8 parallel zu deren oberem Schenkel 17 und unterhalb davon Laschen 55 montiert, die in noch näher dargestellter Weise zur Halterung an den Längsprofilen 4 dienen. Vorteilhafterweise sind die Schwenksegmente 8 an ihrem oberen Schenkel 17 mit einer Einrichtung versehen, die es ermöglicht, die Schwenksegmente 8 gegen die Längsprofile 4 festzulegen. Hierzu können beispielsweise mit Arretierschrauben versehene Klemmpratzen (nicht dargestellt) dienen. Von dem oberen Schenkel 17 der Schwenksegmente 8 ist ein unterer Schenkel 18 abgewinkelt, der zur Halterung des Antriebsaggregats 10 dient. Diesbezüglich wird zunächst auf Fig. 3 verwiesen, die den unteren Schenkel 18 in Draufsicht zeigt. Dieser ist mit einer Bohrung 19 versehen. An das Antriebsaggregat 10 sind zwei in einer gemeinsamen Schwenkachse 11 liegende, in die Bohrung 19 passende Zapfen 16 angeformt, die drehbar in die Bohrungen 19 eingreifen. Durch Drehung um die Zapfen 16 wird das Antriebsaggregat 10 aus der durch den Profilrahmen 3 aufgespannten Ebene herausgeschwenkt. Zur Verminderung der Lagerreibung zwischen den Zapfen 16 und den Bohrungen 19 kann bei Bedarf ein Kugellager oder eine Beschichtung der Zapfen 16 mit einem reibungsarmen Material Verwendung finden.

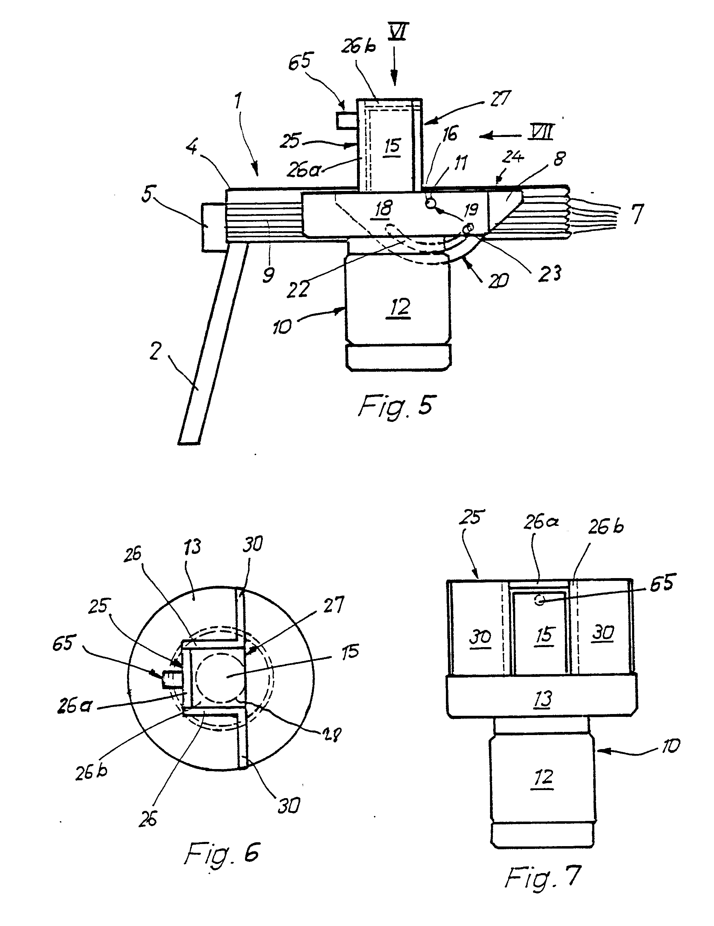

Der untere Schenkel 18 des Schwenksegments 8 ist weiterhin mit einem Schlitz 22 versehen, der durch im wesentlichen konzentrisch zu der Bohrung 19 verlaufende Ränder 21 begrenzt wird. Dieser Schlitz 22 bildet ein Führungselement für ein an das Antriebsaggregat 10 angeformtes Stellglied, das in dem Schlitz 22 läuft und arretierbar ist. Das Führungselement und das Stellglied wirken dabei derart zusammen, daß der Neigungswinkel des Antriebsaggregats 10 begrenzt wird und wohldefiniert eingestellt werden kann. Durch Arretierung des Stellglieds wird das Antriebsaggregat 10 in der jeweils gewünschten Winkelstellung an den Schwenksegmenten 8 festgelegt. Gemäß Fig. 2 und 5 sind an dem Antriebsaggregat 10 zwei in einer gemeinsamen Achse liegende Bolzen 23 vorgesehen, die als Stellglied wirken. Die Bolzen 23 werden von dem Schlitz 22 aufgenommen und bei einem Verschenwenken des Antriebsaggregats 10 zwischen den Rändern 21 des Schlitzes 22 geführt. Die Bogenlänge des Schlitzes 22, die erfindungsgemäß zwischen 90° und 120° beträgt, begrenzt dabei den maximalen Neigungswinkel des Antriebsaggregats 10. Um das Antriebsaggregat 10 in jeder beliebigen Winkelstellung festlegen zu können, sind geeignete, zwischen dem Antriebsaggregat 10 und den Schwenksegmenten 8 wirkende Arretiermittel vorgesehen. In dem dargestellten Ausführungsbeispiel trägt dazu das Ende der Bolzen 23 ein Gewinde, in dem sich eine Klemmschraube 56 gegen das Schwenksegment 8 verschrauben läßt. Als Klemmschraube 56 dient dabei vorzugsweise eine Flügelschraube, die sich von Hand leicht lösen und festziehen läßt. Bezugnehmend wiederum auf Fig. 3, ist der Schlitz 22 mit einzelnen, vorzugsweise kreisrunden Kerben 57 ; 58 versehen, die verschiedenen Indexierstellungen des Antriebsaggregats 10 bzw. eines daran befestigten Werkzeugs zugeordnet sind. Zwei im Winkelabstand von 90° im Endbereich des Schlitzes 22 liegende Kerben 57 vermitteln dabei Eingriffspositionen des Bolzens 23, in denen die Welle des Antriebsaggregats 10 ihre parallel bzw. senkrecht zur Tischebene orientierten Grundstellungen einnimmt. Es sei aber nochmals darauf hingewiesen, daß das Antriebsaggregat 10 auch in einen Winkelbereich jenseits dieser Grundstellungen verschwenkbar ist. Die übrigen Kerben 58 sind Winkelpositionen zwischen den angegebenen Grundstellungen zugeordnet. Der Bolzen 23 läßt sich mittels der Klemmschraube 56 nicht nur in den durch die Kerben 57, 58 bestimmten Positionen, sondern auch in jeder beliebigen Zwischenstellung festlegen. Um eine definierte Winkeleinstellung zu ermöglichen, ist es von Vorteil, im Bereich des Schlitzes 22 auf dem Schwenksegment 8 eine Winkelskala (nicht dargestellt) aufzubringen, an der sich beim Verschwenken des Antriebsaggregats 10 ein mit diesem verbundener Zeiger entlangbewegt.

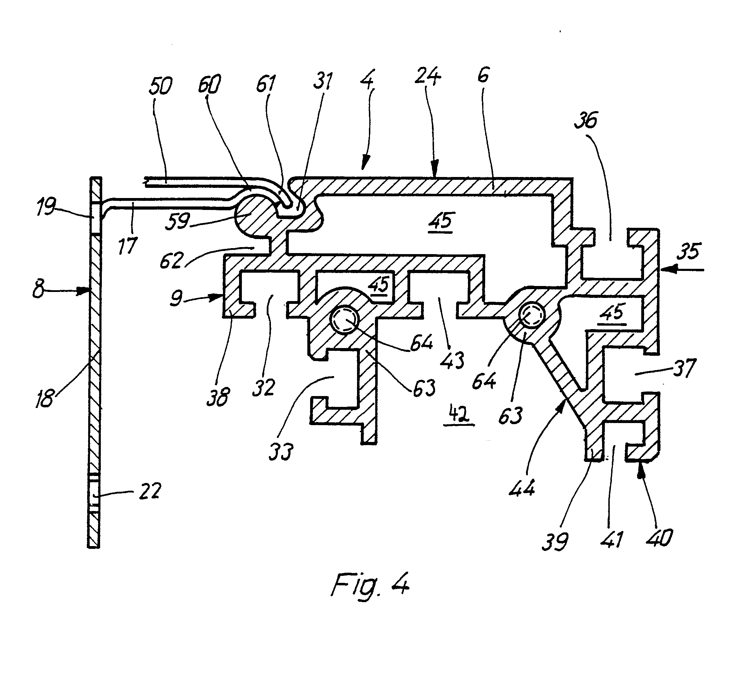

Anhand von Fig. 4 wird im folgenden ein Längsprofil 4 näher erläutert, das in besonders vorteilhafter Weise zum Aufbau des Profilrahmens 3 dienen kann. Das Längsprofil 4 weist einen ebenen Profilrücken 6 auf, der einen Teil der Tischebene bildet. An der der Mitte des Tischgestells zugewandten oberen Kante des Profilrückens 6 ist das Längsprofil 4 unter Bildung einer Längsrinne 31 abgestuft. Die Längsrinne 31 wird durch eine gegenüber der Tischebene versenkt liegende Rundführung 59 begrenzt. Auf diese Rundführung 59 läßt sich der obere Schenkel 17 des Schwenksegments 8 mit einem klauenartigen Abschnitt 60 aufsetzen. Der klauenartige Abschnitt 60 kommt dabei auf der Rundführung 59 vorzugsweise unterhalb der Tischebene zu liegen. Er bildet in dieser Anordnung seinerseits eine Untestützungsfläche für den abgebogenen Rand 61 einer Tischplatte 50. Die Tischplatte 50 läßt sich derart auf den klauenartigen Abschnitten aufsetzen, daß ihr Rand 61 in die Längsrinne 31 des Längsprofils 4 eingreift. Die Rundführung 59 liegt so weit unter den Profilrücken versenkt, daß die Tischplatte 50 in dieser Position gerade auf gleicher Höhe mit dem Profilrücken 6 zu liegen kommt, mit diesem also eine gemeinsame Tischebene bildet. In einer bevorzugten Weiterbildung ist an der Innenseite 9 des Längsprofils 4 unterhalb der Rundführung 59 ein Führungsspalt 62 ausgenommen. In diesen Führungsspalt 62 greifen die bereits erwähnten, an die Schwenksegmente 8 montierten Laschen 55 ein und sichern so die Schwenksegmente gegen ein Abheben von dem Profilrahmen 3. Die Schwenksegmente 8 sind mittels der klauenartigen Abschnitte 60 und der Laschen 55 auf den Längsprofilen 4 verschiebbar geführt ; zur Arretierung in jeweils gewünschten Endstellungen werden sie von unten an die Längsprofile gepratzt. Zusätzlich zu der Längsrinne 31 sind an der Innenseite 9 des Längsprofils 4 weitere Nuten 32 und 33 vorgesehen, in die sich eine oder mehrere Arbeitsplatten, Anschläge oder sonstige Arbeitshilfsmittel verschiebbar einhängen lassen. Die Nuten können beispielsweise die Gestalt einer T-Nut oder einer Schwalbenschwanz-Nut haben. Um weitere Verschiebehalterungen zu schaffen, ist auch auf der der Mitte des Tischgestells abgewandten Außenseite 35 des Längsprofils 4 wenigstens eine entsprechend ausgebildete Nut 36, 37 vorgesehen, in die sich gleichfalls geeignete Werkstückhalter einsetzen lassen.

Das in Fig. 4 dargestellte, den genannten Erfordernissen optimal entsprechende Längsprofil 4 hat die Grundform eines nach unten geöffneten U, dessen U-Basis den ebenen Profilrücken 6 des Längsprofils 4 bildet und an der der Mitte des Tischgestells zugewandten Innenseite 9 unter Bildung der erwähnten, von einer Rundführung 59 begrenzten Längsrinne 31 stufenförmig abfällt, und dessen beidseits des Profilrückens 6 nach unten abgewinkelte U-Schenkel einen inneren Seitenbereich 38 und äußeren Seitenbereich 39 des Längsprofils 4 bilden, wobei der innere Seitenbereich 38 unterhalb der Längsrinne 31 einen Führungsspalt 62 und unterhalb davon eine nach unten offene erste T-Nut 32 und relativ zu dieser nach unten und außen versetzt eine weitere, seitlich nach innen hin offene zweite T-Nut 33 aufweist. Der äußere Seitenbereich 39 ist mit einer gegenüber dem Profilrücken 6 versenkten, nach oben hin offenen dritten T-Nut 36 versehen, unterhalb von der eine seitlich nach außen hin offene vierte T-Nut 37 und an ihrer nach unten weisenden Endfläche 40 eine nach unten hin offene L-Nut 41 angeordnet ist. Des weiteren ist in der U-Öffnung 42 des Längsprofils 4 eine Schrägwand 44 vorgesehen, gegen die die Tischbeine 2 zur Anlage kommen. Diese Schrägwand 44 gibt einerseits die Winkelstellung der Tischbeine 2 vor und vermittelt andererseits nach dem Prinzip von Nut und Feder eine besonders stabile Einbaustellung der Tischbeine 2. Das insgesamt recht komplex gestaltete Längsprofil 4 wird vorteilhafterweise als Strangpreßteil aus Aluminium gefertigt. Dieses Material weist bei niedrigem Gewicht ein hohes Maß an Stabilität auf. Zur Gewichtsverminderung können in dem Längsprofil 4 überdies verschiedene Hohlkammern 45 ausgenommen sein. Zwischen den diversen Hohlkammern 45 und Nuten bleiben an der Unterseite des Längsprofils zwei massive Abschnitte 63 stehen, die in ihrem zentralen Bereich mit zwei Gewindebohrungen 64 versehen sind. In diesen Gewindebohrungen 64 werden die Längsprofile 4 stirnseitig mit den Querprofilen 5 verschraubt. Die Querprofile 5 können ebenfalls auf eine Verschiebeführung von Anschlagsystemen und Hilfswerkzeugen hin ausgelegt sein ; um die Größe der erfindungsgemäßen Werkbank 1 auf einfache Weise verändern zu können, sind überdies Querprofile 5 in verschiedenen Normlängen vorgesehen.

Anhand von Fig. 5 wird eine Ausführungsform der erfindungsgemäßen Werkbank 1 verdeutlicht, bei der das Antriebsaggregat 10 in der einer vertikalen Orientierung der Welle entsprechenden Grundstellung unterhalb der Tischebene 24 versenkt liegt. In der Abbildung ist der Blick von der Innenseite des Profilrahmens 3 auf ein Längsprofil 4 gerichtet. Die Innenseite 9 des Längsprofils 4 erscheint deshalb mit ihren Kanten 7 in Draufsicht. An dem Längsprofil 4 ist in der beschriebenen Weise ein Schwenksegment 8 gehaltert, in der das Antriebsaggregat 10 um die Schwenkachse 11 drehbar gelagert ist. Der das Antriebsaggregat 10 halternde untere Schenkel 18 des Schwenksegments 8 hat in dem dargestellten Ausführungsbeispiel die Gestalt eines mit seiner Schmalseite nach unten gerichteten, abgerundeten Trapezes. Die gerundete Kante 20 verläuft dabei konzentrisch zu der Bohrung 19, in die der Zapfen 16 des Antriebsaggregats 10 drehbar eingesteckt ist. Das Antriebsaggregat 10 nimmt eine Grundstellung ein, in der seine Welle vertikal zu der Tischebene 24 orientiert ist. Man erkennt, daß der Bolzen 23 dabei im Endbereich des Schlitzes 22 zu liegen kommt. An der Welle des Antriebsaggregats ist ein Hülsenträger 15 montiert, der beispielsweise zwecks Ausbildung einer Schleifwalze mit einer Schleifhülse belegt sein kann. Gemäß einer bevorzugten Ausbildung der Erfindung ist dieses Werkzeug durch ein passendes, an den Schwenksegmenten 8 oder dem Antriebsaggregat 10 festlegbares Gehäuse abgedeckt, so daß die Schleifwalze im Betrieb nur mit einem Teil ihrer Oberfläche aus dem Gehäuse heraussteht. Das Gehäuse kann, wie in Fig. 2 dargestellt, die einfache Form eines Rechteckwinkels haben ; es kann aber auch gemäß der Ausführungsform der Abbildungen Fig. 5 bis Fig. 7 ein nach drei Seiten und oben hin geschlossenes Gehäuse um das Werkzeug herum vorgesehen sein. Das Gehäuse weist in jedem Fall beidseits des Werkzeugs 15 zwei Flügel 30 auf, die bei vertikaler Orientierung des Werkzeugs als Anschlagflächen und bei horizontaler Orientierung des Werkzeugs als Auflageflächen für ein Werkstück dienen. Die Flügel 30 können dabei in einer Ebene liegen, um eine gemeinsame Anschlag- oder Auflagefläche zu bilden. Insbesondere bei horizontaler Orientierung der Welle des Antriebsaggregats 10 und Verwendung eines spanabhebenden Werkzeugs kann aber auch eine Anordnung gewählt werden, bei der die Flügel 30 parallel und in einem Abstand voneinander angeordnet sind. Hierdurch wird eine Abrichteinrichtung geschaffen, deren Spantiefe der Höhendifferenz zwischen den Flügeln 30 entspricht. In der Ausführungsform gemäß Fig. 5 bis 7 werden die Flügel 30 durch zwei Seitenwände 26, eine Rückwand 26a und eine obere Abdeckplatte 26b zu einer das Werkzeug 15 umschließenden Schutzhaube ergänzt. Allein die Frontseite 27 der Schutzhaube 25 ist frei, so daß der Hülsenträger 15 zugänglich ist. Dieser ist im Abstand zu den Seitenwänden 26 und der Rückwand 26a in der Schutzhaube 25 derart angeordnet, daß seine arbeitswirksame, rotierende Mantelfläche 28 geringfügig aus der Schutzhaube 25 heraussteht. Eine Bedienungsperson ist so vor einem versehentlichen Hineingreifen in das Werkzeug geschützt. Die Flügel 30 der Schutzhaube 25 dienen als Anschlag für das zu bearbeitende Werkstück. Nach einer bevorzugten Weiterbildung der Erfindung ist die Schutzhaube 25 mit einer Vorrichtung zum Absaugen von Spänen und/oder zum Befeuchten des Werkzeugs 15 mit einem Kühl- oder Schmiermittel versehen. Zum Anschluß der jeweiligen Vorrichtung dient ein Stutzen 65, der beispielsweise an der Rückwand 26a der Schutzhaube 25 angeordnet sein kann. Durch die Verwendung einer Absaugvorrichtung wird ein Arbeiten unter sauberen Betriebsbedingungen ermöglicht, was den Bedienungskomfort der Werkbank 1 sehr erhöht.

Besonders vorteilhafte Werkzeuge für die erfindungsgemäße Werkbank 1 sind zum einen ein sog. Schleif-Igel, d. h. ein Schleifhülsenträger mit einem zylindrischen Grundkörper und einem darauf aufgebrachten hartelastischen Belag, auf den eine Schleifhülse aufgesteckt werden kann. Der hartelastische Belag kann entweder aus Vollgummi oder aus einzelnen, radial nach außen abstehenden Saugnäpfen aus Gummi bestehen. Der hartelastische Belag ermöglicht ein federndes, elastisches Schleifen und Polieren. Zum anderen kann das Antriebsaggregat 10 vorteilhafterweise auf der Abtriebsseite seiner Welle eine Frontplatte 14 tragen, die als Träger eines Schleifmittels ausgestattet ist und an ihrem äußeren Umfangsrand einen überstehenden Trennscheibenring trägt. Durch die Möglichkeit, das Antriebsaggregat 10 μm die Schwenkachse 11 zu schwenken, lassen sich mit diesen und anderen Werkzeugen eine Vielzahl von Bearbeitungsvorgängen durchführen. Werkstücke können beispielsweise getrennt oder geschlitzt und anschließend geschliffen und poliert werden, wobei entweder überhaupt keine oder nur sehr schnelle, einfache Umbauten an der Werkbank 1 erforderlich sind. Es besteht die Möglichkeit, Flächen zu schleifen, Kanten im Winkel und auf Gehrung zu schleifen und Rundungen sowie Profile zu schleifen und zu polieren, wobei eine Vielzahl von Materialien wie z. B. Holz, Leder, Kunststoff, Plexiglas, glasverstärkter Kunststoff, Stein und Metall bearbeitet werden kann.

**Patentansprüche**

1. Werkbank mit einem Antriebsaggregat für eine ein Werkzeug lösbar tragende Antriebswelle, die mit dem Antriebsaggregat gemeinsam verschwenkbar und feststellbar an einem Tischgestell angeordnet ist, das eine als Auflage für Werkstücke dienende Tischplatte besitzt, wobei die Antriebswelle und das Antriebsaggregat unter Vermittlung von Lagerzapfen in Schwenkeingriff mit zwei am Tischgestell vorgesehenen und parallel zueinander angeordneten Schwenksegmenten stehen, dadurch gekennzeichnet, daß das Tischgestell einen Profilrahmen (3) besitzt, wobei die Tischplatte (50) in Längsprofilen (4) des Profilrahmens (3) verschiebbar geführt ist, daß die beiden Schwenksegmente (8) an zwei einander gegenüberliegenden Längsprofilen (4) des Profilrahmens (3) entlang diesen verstellbar und abnehmbar angeordnet sind und an ihnen das mit integrierter Antriebswelle ausgestattete Antriebsaggregat (10) um zwei in einer gemeinsamen Drehachse angeordnete und in Bohrungen der Schwenksegmente einsitzende Lagerzapfen (16) verschwenkbar und feststellbar gelagert ist, und daß das Antriebsaggregat (10) zwischen Stellungen verschwenkbar ist, in denen seine Antriebswelle parallel bzw. rechtwinkelig zur Tischplatte (50) orientiert ist.

2. Werkbank nach Anspruch 1, dadurch gekennzeichnet, daß wenigstens ein Schwenksegment (8) mit einem konzentrisch zu den Bohrungen angeordneten Führungselement versehen ist, in dem ein Stellglied des Antriebsaggregats (10) läuft und arretierbar ist.

3. Werkbank nach Anspruch 2, dadurch gekennzeichnet, daß das Schwenksegment (8) im wesentlichen L-förmige Gestalt hat, wobei der senkrechte Schenkel (18) mit der Bohrung (19) für den Zapfen (16) einen durch konzentrisch zu der Bohrung (19) verlaufende Ränder begrenzten Schlitz (22) z. B. mit einer Bogenlänge zwischen 90° und 120° besitzt, der einen mit dem Antriebsaggregat (10) verbundenen Bolzen (23) aufnimmt, während der obere Schenkel in der Führungsschiene des Längsprofils (4) geführt ist.

4. Werkbank nach Anspruch 3, dadurch gekennzeichnet, daß der Bolzen (23) ein Gewinde trägt, in dem eine Klemmschraube (56) gegen das Schwenksegment (8) verschraubbar ist.

5. Werkbank nach Anspruch 3, dadurch gekennzeichnet, daß der Schlitz (22) mit einzelnen, vorzugsweise kreisrunden Ausbuchtungen (57, 58) versehen ist, die verschiedenen Feststellstellungen des Antriebsaggregat (10) zugeordnet sind.

6. Werkbank nach Anspruch 3, dadurch gekennzeichnet, daß auf dem Schwenksegment (8) im Bereich des Schlitzes (22) eine Winkelskala aufgebracht ist, an der sich beim Verschwenken des Antriebsaggregats (10) ein mit diesem verbundener Zeiger entlang bewegt.

7. Werkbank nach einem der Ansprüche 1 bis 6, mit einem das jeweilige Werkzeug im Betrieb zum Teil abdeckenden Gehäuse, dadurch gekennzeichnet, daß das Gehäuse an dem Schwenksegment (8) oder dem Antriebsaggregat (10) befestigbar ist.

8. Werkbank nach Anspruch 7, dadurch gekennzeichnet, daß das Gehäuse beidseits des Werkzeugs zwei Flügel (30) aufweist, die bei vertikaler Orientierung des Werkzeugs als Anschlagflächen, bei horizontaler Orientierung des Werkzeugs jedoch als Auflageflächen für das Werkstück dienen.

9. Werkbank nach Anspruch 8, dadurch gekennzeichnet, daß die Flügel (30) unter Bildung einer Abrichteinrichtung parallel und in einem Abstand gegeneinander versetzt angeordnet sind, der der Spantiefe der Abrichteinrichtung entspricht.

10. Werkbank nach Anspruch 7, dadurch gekennzeichnet, daß das Gehäuse als Schutzhaube (25) ausgebildet ist und mit einem Stutzen (65) zum Anschluß einer Absaug- oder Berieselungsvorrichtung versehen ist.

11. Werkbank nach einem der Ansprüche 1 bis 10, dadurch gekennzeichnet, daß die Längsprofile (4) an ihrer der Tischplatte zugewandten Seite jeweils unter Bildung einer durch eine gegenüber der Tischebene (24) versenkt liegende Rundführung (59) begrenzten Längsrinne (31) abgestuft sind und der obere Schenkel (17) des Schwenksegments (8) auf die Rundführung (59) mit einem klauenartigen Abschnitt (60) aufsetzbar ist, der auf der Rundführung (59) unterhalb der Tischebene (24) zu liegen kommt und seinerseits als Unterstützungsfläche für den abgebogenen Rand (61) der Tischplatte (50) dient.

12. Werkbank nach Anspruch 11, dadurch gekennzeichnet, daß der abgebogene Rand (61) der Tischplatte (50) in die Längsrinne (31) einsetzbar ist und die Tischplatte (50) in dieser Stellung mit dem Profilrücken (6) des Längsprofils (4) eine gemeinsame Tischebene (24) bildet.

13. Werkbank nach Anspruch 11 oder 12, dadurch gekennzeichnet, daß an der Innenseite (9) des Längsprofils (4) unterhalb der Rundführung (59) ein Führungsspalt (62) ausgenommen ist, in den eine etwa parallel und im Abstand zu dem oberen Schenkel (17) an das Schwenksegment (8) motierbare Lasche (55) eingreift.

14. Werkbank nach einem der Ansprüche 11 bis 13, dadurch gekennzeichnet, daß das Längsprofil (4) die Grundform eines nach unten geöffneten U aufweist, in dessen U-Öffnung (42) die Tischbeine (2) zur Anlage kommen und dessen U-Basis einen ebenen Profilrücken (6) des Längsprofils (4) bildet und an der der Mitte des Tischgestells zugewandten Innenseite (9) unter Bildung der von der Rundführung (59) begrenzten Längsrinne (31) stufenförmig abfällt, und dessen beidseits des Profilrückens (6) nach unten abgewinkelten U-Schenkel einen inneren Seitenbereich (38) und einen äußeren Seitenbereich (39) des Längsprofils (4) bilden, wobei der innere Seitenbereich (38) unterhalb der Längsrinne (31) den Führungsspalt (62) zur Aufnahme der Lasche (55) des Schwenksegments und darunter eine nach unten offene erste T-Nut (32) und relativ zu dieser nach unten und außen versetzt eine weitere, seitlich nach innen hin offene zweite T-Nut (33) aufweist, während der äußere Seitenbereich (39) eine gegenüber dem Profilrücken (6) versenkte, nach oben hin offene dritte T-Nut (36), unterhalb von dieser eine seitlich nach außen hin offene vierte T-Nut (37) und an ihrer nach unten weisenden Endfläche (40) eine nach unten hin offene L-Nut (41) aufweist.

## Claims

1. A work bench with a drive assembly for a drive shaft carrying a removable tool and mounted pivotably and lockably together with said drive assembly on a table frame provided with a top serving as a work support, the drive shaft and the drive assembly being in swivelling engagement with two parallel swivel segments provided on the table frame by way of bearing journals, wherein the table has a sectional frame (3), the table top (50) being guided in longitudinal sections (4) of the frame (3), wherein the two swivel segments (8) are adjustably and removably mounted on opposite longitudinal sections (4) of the frame (3) and the drive assembly (10) with its integral shaft is mounted thereon capable of being pivoted about and locked to two bearing journals (16) lying in a common axis of rotation and located in bores of the swivel segments, and wherein the drive assembly (10) is capable of swivelling between two positions, so that the drive shaft is either parallel to or square to the tabel top (50).

2. A work bench as claimed in Claim 1, wherein at least one of the swivel segments (8) is provided with a guide element concentric with the bores, in which an actuator of the drive assembly (10) moves and can be locked.

3. A work bench as claimed in Claim 2, wherein the swivel segment (8) is essentially L-shaped, the vertical leg (18) with the bore (19) for the journal (16) having a slot (22) with an arc length of 90° to 120° defined by edges concentric with the bore (19), said slot (22) engaging a pin (23) connected to the drive assembly (10), while the upper leg is guided in the guide rail of the longitudinal section (4).

4. A work bench as claimed in Claim 3, wherein the pin (23) is provided with a thread for tightening a clamping screw (56) against the swivel segment (8).

5. A work bench as claimed in Claim 3, wherein the slot (22) is provided with individual, preferably circular, indentations (57, 58) associated with various locking positions for the drive assembly (10).

6. A work bench as claimed in Claim 3, wherein an angle scale is fitted to the swivel section (8) in the region of the slot (22), in which scale a pointer connected to the drive assembly (10) moves when the drive assembly is swivelled.

7. A work bench as claimed in any of Claims 1 to 6 provided with a housing partially covering the tool during operation, wherein the housing can be located either on the swivel segment (8) or on the drive assembly (10).

8. A work bench as claimed in Claim 7, wherein the housing has a wing (30) on either side of the tool, said wings serving as stop faces when the tool is vertical and as work supports when the tool is horizontal.

9. A work bench as claimed in Claim 8, wherein the wings (30) are arranged parallel to form a truing attachment and offset relative to each other by an amount corresponding to the cutting depth of said attachment.

10. A work bench as claimed in Claim 7, wherein the housing forms a protective hood (25) provided with a connection (65) for an extractor or sprinkler.

11. A work bench as claimed in any of Claims 1 to 10, wherein the longitudinal sections (4) are stepped on the side facing the table top to form a longitudinal groove (31) limited by a circular guide (59) lying below the table level (24), and wherein the upper leg (17) of the swivel segment (8) is capable of being placed on the circular guide (59) with a claw-type section (60) resting on the circular guide (59) below the table level (24) and in turn supporting the curved edge (61) of the table top (50).

12. A work bench as claimed in Claim 11, wherein the curved edge (61) of the table top (50) is insertable in the longitudinal groove (31), the table top (50) in this position forming a common table level (24) with the back (6) of the longitudinal section (4).

13. A work bench as claimed in Claim 11 or 12, wherein a guide recess (62) is provided in the inside (9) of the longitudinal section (4) below the circular guide (59) for the engagement of a link plate (55) attachable to the swivel segment (8) approximately parallel to and at a distance from the upper leg (17).

14. A work bench as claimed in any of Claims 11 to 13, wherein the longitudinal section (4) has the basic shape of an inverted U, in the opening (42) of which the table legs (2) sit, while its base forms a flat back (6) of the longitudinal section (4) and the inside (9) facing the centre of the table frame is stepped to form the longitudinal groove (31) defined by the circular guide (59), the two legs of the U which extend downwards from either side of the back (6) forming an internal side section (38) and an external side section (39) of the longitudinal section (4), the internal side section (38) having below the longitudinal groove (31) the guide recess (62) for the link plate (55) of the swivel segment (8) and below this a first T-groove (32) facing downward followed by a second T-groove (33) offset downwards and outwards relative to the first T-groove and facing inwards, while the external side section (39) has a third T-groove (36) lying below the back (6) and facing upwards and below this a fourth T-groove (37) facing outwards, the lower end face (40) of which forms an L-groove (41) facing downwards.

**Revendications**

1. Etabli avec un groupe moteur pour un arbre d'entraînement qui porte un outil de manière amovible et qui est prévu en commun avec le groupe moteur, avec possibilité de pivotement et de fixation sur un bâti de table présentant un plateau servant de support pour des pièces travaillées, l'arbre d'entraînement et le groupe moteur étant liés en rotation, par l'intermédiaire de tourillons, avec deux segments pivotants prévus sur le bâti de table et disposés parallèlement entre eux, caractérisé en ce que le bâti de table comprend un cadre profilé (3), le plateau (50) étant guidé en coulissement dans des profilés longitudinaux (4) du cadre profilé (3), en ce que les deux segments pivotants (8) sont disposés sur deux profilés longitudinaux (4) en vis-à-vis du cadre profilé (3), avec possibilité de déplacement le long de ces derniers et de dépose, en ce que le groupe moteur (10), équipé d'un arbre d'entraînement intégré, est monté sur ces deux segments avec possibilité de fixation et de pivotement autour de deux tourillons (16) de même axe de rotation qui reposent dans des alésages des segments pivotants, et en ce que le groupe moteur (10) peut pivoter entre des positions auxquelles son arbre d'entraînement est respectivement orienté parallèlement ou perpendiculairement au plateau (50).

2. Etabli selon la revendication 1, caractérisé en ce qu'au moins un segment pivotant (8) est pourvu d'un élément de guidage disposé concentriquement par rapport aux alésages, dans lequel s'étend et peut être bloqué un organe d'arrêt du groupe moteur (10).

3. Etabli selon la revendication 2, caractérisé en ce que le segment pivotant (8) a sensiblement une forme de L, la branche verticale (18) munie de l'alésage (19) pour le tourillon (16) présentant une fente (22) délimitée par des bords s'étendant concentriquement par rapport à l'alésage (19) et ayant par exemple une longueur d'arc comprise entre 90° et 120°, qui reçoit un goujon (23) assemblé au groupe moteur (10), tandis que la branche supérieure est guidée dans la glissière de guidage du profilé longitudinal (4).

4. Etabli selon la revendication 3, caractérisé en ce que le goujon (23) porte un filetage dans lequel une vis de serrage (56) peut être vissée contre le segment pivotant (8).

5. Etabli selon la revendication 3, caractérisé en ce que la fente (22) est munie d'indentations (57, 58) distinctes de préférence circulaires, qui sont associées à différentes positions de blocage du groupe moteur (10).

6. Etabli selon la revendication 3, caractérisé en ce qu'une graduation angulaire est prévue sur le segment pivotant (8) au voisinage de la fente (22), le long de laquelle se déplace lors du pivotement du groupe moteur (10) un index lié à ce dernier.

7. Etabli selon une des revendications 1 à 6, avec un carter recouvrant en fonctionnement partiellement l'outil mis en place, caractérisé en ce que le carter peut être fixé sur le segment pivotant (8) ou sur le groupe moteur (10).

8. Etabli selon la revendication 7, caractérisé en ce que le carter présente de chaque côté de l'outil une aile (30), les deux ailes (30) servant de faces de butée en cas d'orientation verticale de l'outil, et de faces d'appui pour la pièce travaillée en cas d'orientation horizontale de l'outil.

9. Etabli selon la revendication 8, caractérisé en ce que les ailes (30) sont disposées parallèlement en formant un dispositif de dégauchissage, en étant décalées l'une par rapport à l'autre d'une distance correspondant à la section de coupure du dispositif de dégauchissage.

10. Etabli selon la revendication 7, caractérisé en ce que le carter est conçu comme un capot protecteur (25) et est muni d'un branchement (65) pour le raccordement d'un dispositif d'aspiration ou d'arrosage.

11. Etabli selon l'une des revendications 1 à 10, caractérisé en ce que les profilés longitudinaux (4) sont à gradins sur leur côté tourné vers le plateau, en formant à chaque fois une rainure longitudinale (31) délimitée par un guide circulaire (59) qui se trouve en retrait par rapport au plan (24) de la table, et en ce que la branche supérieure (17) du segment pivotant (8) peut être montée sur le guide circulaire (59) par une partie (60) du genre griffe, qui vient se placer sur le guide circulaire (59) en dessous du plan (24) de la table, et qui sert elle-même de face d'appui pour le bord recourbé (61) du plateau (50).

12. Etabli selon la revendication 11, caractérisé en ce que le bord recourbé (61) du plateau (50) peut être inséré dans la rainure longitudinale (31), et en ce que le plateau (50) forme dans cette position un plan de table (24) commun avec le dos (6) du profilé longitudinal (4).

13. Etabli selon la revendication 11 ou 12, caractérisé en ce qu'est ménagée sur le côté intérieur (9) du profilé longitudinal (4) en dessous du guide circulaire (59) une fente de guidage (62), dans laquelle s'engage une patte (55) qui peut être montée sur le segment pivotant (8) sensiblement parallèlement et à distance de la branche supérieure (17).

14. Etabli selon l'une des revendications 11 à 13, caractérisé en ce que le profilé longitudinal (4) présente la forme de base d'un U ouvert vers le bas, les pieds (2) de table venant s'appuyer dans l'ouverture (42) du U, la base du U formant un dos plat (6) du profilé longitudinal (4) et s'abaissant en gradins sur le côté intérieur (9) tourné vers le milieu du bâti de table en formant la rainure longitudinale (31) délimitée par le guide circulaire (59), et les branches du U, coudées vers le bas de chaque côté du dos (6) du profilé, formant une partie latérale intérieure (38) et une partie latérale extérieure (39) du profilé longitudinal (4), la partie latérale intérieure (38) présentant en dessous de la rainure longitudinale (31) la fente de guidage (62) destinée à recevoir la patte (55) du segment pivotant, et en dessous de cette fente une première encoche en T (32) ouverte vers le bas et une deuxième encoche en T (33) ouverte latéralement vers l'intérieur qui est située décalée vers le bas et vers l'extérieur par rapport à la première, tandis que la partie latérale extérieure (39) présente une troisième encoche en T (36) ouverte vers le haut et située en retrait par rapport au dos (6) du profilé, en dessous de cette troisième encoche une quatrième encoche en T (37) ouverte latéralement vers l'extérieur, et sur la face terminale (40) de cette dernière qui est orientée vers le bas une encoche en L (41) ouverte vers le bas.

0 1 1 7 3 0 5

*Fig. 1*

*Fig. 2*

1

17 19 IV 8

17

18

57

57 21

58 22

20

IV

Fig.3

0 117 305

Fig. 4

Fig. 5

Fig. 6

Fig. 7